# DEMANDE DE BREVET EUROPEEN

(11) **EP 1 635 291 A1**
(43) Date de publication de la demande: **15.03.2006**
(21) Numéro de dépôt: 05291496.7
(22) Date de dépôt: 11.07.2005
(51) Int. Cl.: G06Q 10/00

(54) **Procédé et agent de détection de messages non sollicités**

(30) Priorité: 10.09.2004 FR 0452012
(71) Demandeur: FRANCE TELECOM, 75015 Paris (FR)
(72) Inventeur: Rabret, Laurent, 92170 Vanves (FR); Dugoujon, David, 92130 Issy les Moulineaux (FR); Salaun, Mikaél, 29590 Rosnoen (FR)
(74) Mandataire: Stephann, Valérie Annabelle

(57) **Abrégé**

L'invention concerne un procédé de détection, parmi des messages reçus par un terminal (1A), de messages non sollicités, dans lequel au moins l'un des deux mécanismes d'analyse suivants est mis en oeuvre afin de détecter si un message reçu est un message non sollicité:
- un mécanisme d'analyse locale du message reçu à l'aide d'un agent de détection de messages non sollicités, propre au terminal (1A) et doté d'une base de données locale contenant des attributs de messages non sollicités,
- un mécanisme d'analyse du message reçu par interrogation d'une base de données distante d'un réseau (100) et contenant des attributs de messages non sollicités.

Dans le cas où un premier des deux mécanismes d'analyse détecte qu'un message reçu est un message non sollicité, il est prévu une étape consistant à mettre à jour la base de données utilisée par le second mécanisme d'analyse avec le message non sollicité détecté par le premier mécanisme.

## Description

L'invention concerne la détection de messages non sollicités.

Actuellement, la moitié des messages électroniques circulant à travers l'Internet sont des "spams", c'est-à-dire des messages non sollicités, inutiles, souvent provocateurs, qui sont diffusés massivement, lors d'un "pollupostage", à de nombreux terminaux, causant ainsi une pollution de l'Internet. Les spams constituent un véritable fléau de l'Internet. Ce phénomène de pollution par des messages non sollicités ne concerne pas seulement la messagerie électronique de l'Internet mais touche également progressivement d'autres services de messagerie tels que la messagerie instantanée ou la messagerie par SMS. Dans le cas de la messagerie instantanée, les messages non sollicités sont appelés des "spims" alors que, dans le cas de la messagerie par SMS, on parle plutôt de "speams".

On notera ici que par l'expression "messages non sollicités", on entend désigner les messages inutiles, diffusés massivement vers de nombreux destinataires à travers un réseau et polluant de ce fait celui-ci. Il peut s'agit de "spams", de "spims", de "speams" ou de tout autre message de ce type.

Il existe actuellement deux types de solutions pour lutter contre cette pollution des réseaux par des messages non sollicités.

La première solution est basée sur une approche réseau consistant à modifier les protocoles de messagerie et à ajouter de nouveaux paramètres dans l'en-tête des messages. Pour être réellement efficace, cette solution nécessite une implémentation mondiale.

La seconde solution est basée sur l'analyse des messages en vue de la détection des messages non sollicités. Plusieurs mécanismes d'analyse de messages ont été développés. On peut citer notamment un mécanisme d'analyse de messages par filtrage bayésien et un mécanisme d'analyse des message par leurs signatures.

Le mécanisme d'analyse des messages par filtrage bayésien utilise une base de données, qualifiée de "dictionnaire", répertoriant des unités lexicales et, pour chacune d'elles, une probabilité d'être contenue dans un message non sollicité. Une "unité lexicale", également parfois appelée "corpus", désigne un mot, un groupe de mots formant une expression ou un dérivé d'un mot ou d'une expression constitué(e) d'une combinaison de lettres et d'autres éléments, par exemple des caractères de ponctuation. Chaque message reçu est décomposé en unités lexicales, lesquelles sont comparées à celles contenues dans le dictionnaire afin de déterminer la probabilité globale du message d'être un message non sollicité. Si la probabilité globale du message dépasse un seuil haut, par exemple 0,7, le résultat de l'analyse est que le message est un message non sollicité. Si la probabilité globale du message est inférieure à un seuil bas, par exemple 0,3, le résultat de l'analyse est que le message n'est pas un message non sollicité. Si la probabilité du message est située entre les seuils bas et haut, autrement dit dans une plage d'incertitude, il existe une incertitude sur le caractère sollicité ou non sollicité du message. Un tel mécanisme d'analyse des messages par filtrage bayésien présente plusieurs inconvénients. D'une part, à l'intérieur de la zone d'incertitude, la probabilité du message ne permet pas de déterminer de façon certaine si le message est sollicité ou non sollicité. D'autre part, pour être efficace, chaque filtre bayésien doit être adapté à une "clique" donnée d'utilisateurs, c'est-à-dire à une communauté d'utilisateurs partageant le ou les même(s) centre(s) d'intérêt. Si le filtre bayésien est générique, en ce sens qu'il est utilisé par un grand nombre d'utilisateurs partageant des intérêts très divers, il est mal adapté à une communauté hétérogène d'utilisateurs. Dans ce cas, le dictionnaire manque de pertinence vis-à-vis des messages échangés entre les différents utilisateurs du fait que ces messages traitent de sujets très variés et il faut alors très régulièrement le remettre à jour.

Le mécanisme d'analyse des messages par leurs signatures utilise une base de données de signatures de messages non sollicités, centralisée ou partagée par une pluralité de terminaux formant un réseau de pairs, également appelé réseau "Peer-to-Peer" ou "P2P". Ces signatures peuvent être obtenues, par exemple, par une fonction de hachage telle que SHA-1. Dans le cas d'une architecture distribuée, chaque terminal du réseau P2P mémorise une partie de la base de données, laquelle est ainsi distribuée sur le réseau P2P. Lorsqu'un terminal reçoit un message, il calcule la signature de celui-ci puis interroge le réseau P2P afin de savoir si cette signature est répertoriée dans la base de données du réseau P2P. Si tel est le cas, le message est traité comme message non sollicité. Il peut être enregistré dans un emplacement mémoire spécifique du terminal, marqué ou supprimé. La mise à jour de la base de données partagée de signatures de messages non sollicités du réseau P2P s'effectue de façon "manuelle": lorsque l'utilisateur d'un terminal estime qu'un message reçu constitue un message non sollicité, il en avertit le réseau P2P en lui envoyant la signature du message non sollicité. Celle-ci est alors ajoutée à la base de données partagée de signatures de messages non sollicités du réseau P2P. Cette méthode de détection de messages non sollicités présente plusieurs inconvénients. Elle est d'abord moins performante que celle basée sur le filtrage bayésien du fait qu'elle repose sur un mécanisme de détection et d'élection manuelle des messages non sollicités par les utilisateurs. En effet, un message donné peut constituer un message non sollicité pour un utilisateur, mais pas pour un autre utilisateur. En outre, certains utilisateurs peuvent ne pas signaler au réseau P2P les messages non sollicités qu'ils ont reçus. D'autre part, en cas de rupture de connexion sur le réseau P2P, par exemple en raison d'une panne d'un serveur Proxy dans un réseau local d'entreprise, l'analyse des messages arrivants est momentanément interrompue car la base de données distribuée n'est plus disponible. Enfin, pour ne pas surcharger le réseau P2P, seules les signatures des messages non sollicités les plus récents sont enregistrées dans la base de données, les signatures des messages non sollicités les plus anciens y étant supprimées. De ce fait, l'efficacité du système est réduite si les utilisateurs ne consultent pas régulièrement leur messagerie.

La présente invention a d'abord pour but de proposer un procédé de détection, parmi des messages reçus par un terminal, de messages non sollicités, dans lequel au moins l'un des deux mécanismes d'analyse suivants est mis en oeuvre afin de détecter si un message reçu est un message non sollicité:
- un mécanisme d'analyse locale du message reçu à l'aide d'un agent de détection de messages non sollicités, propre au terminal et doté d'une base de données locale contenant des attributs de messages non sollicités,
- un mécanisme d'analyse du message reçu par interrogation d'une base de données distante d'un réseau et contenant des attributs de messages non sollicités,

qui permette d'accroître l'efficacité des méthodes de détection de messages non sollicités par analyse des messages reçus.

A cet effet, dans le cas où un premier des deux mécanismes d'analyse détecte qu'un message reçu est un message non sollicité, il est prévu une étape consistant à mettre à jour la base de données utilisée par le second mécanisme d'analyse avec le message non sollicité détecté par le premier mécanisme.

Grâce à l'invention, l'un des deux mécanismes d'analyse met à jour la base de données utilisée par le second mécanisme et, ainsi, la rend plus pertinente. L'efficacité du second mécanisme de détection est ainsi améliorée grâce au premier mécanisme de détection.

Dans un mode de réalisation préféré,
- le mécanisme d'analyse locale des messages est mis en oeuvre en premier,
- dans le cas où le mécanisme d'analyse locale ne parvient pas à déterminer de façon certaine si le message reçu est non sollicité, le mécanisme d'analyse par interrogation de la base de données distante est mis en oeuvre en second.

Ainsi, le mécanisme local de détection de messages non sollicités est déclenché d'abord, mais s'il ne permet pas de déterminer de façon certaine si le message est sollicité ou non sollicité, le mécanisme d'analyse par interrogation de la base de données distante est déclenché afin de lever l'incertitude. On met ainsi en oeuvre les deux mécanismes d'analyse, l'un après l'autre, afin d'augmenter l'efficacité de l'analyse.

De préférence, si le mécanisme d'analyse par interrogation de la base de données distante détecte que le message reçu est un message non sollicité, la base de données locale est mise à jour. La base de données locale peut ainsi être mise à jour, de façon automatique, c'est-à-dire sans intervention d'un utilisateur, de manière à ce que le mécanisme d'analyse locale soit capable de détecter ce nouveau message non sollicité.

Avantageusement, dans le cas où le mécanisme d'analyse locale des messages détecte que le message est un message non sollicité, la base de données distante est mise à jour.

Ainsi, le réseau partageant les mêmes ressources, notamment une même base de données d'attributs de messages non sollicités, comprend des terminaux pairs ayant un ou plusieurs centres d'intérêt communs. Tout ou partie de ces terminaux peuvent ainsi être équipés d'un mécanisme d'analyse locale des messages spécialisé en fonction de ces centres d'intérêt et, de ce fait, plus efficace. La base de données du réseau peut ainsi être mise à jour par une kyrielle de terminaux.

L'invention concerne également un agent de détection de messages non sollicités pour un terminal, pour la mise en oeuvre du procédé défini ci-dessus, comprenant une base de données locale contenant des attributs de messages non sollicités et des moyens d'analyse locale de messages agencés pour déterminer si un message est un message non sollicité par comparaison d'attributs du message avec les attributs de la base de données locale, caractérisé par le fait qu'il comprend des moyens pour, sur détection locale d'un message non sollicité, mettre à jour une base de données distante d'un réseau, contenant des attributs de messages non sollicités.

L'invention concerne aussi un terminal comprenant un agent de détection tel que défini ci-dessus.

L'invention porte également sur un réseau pour la détection de messages non sollicités comprenant:
- une pluralité de terminaux tels que définis précédemment,
- une base de données contenant des attributs de messages non sollicités, accessible aux terminaux du réseau en vue de la détection de messages non sollicités par interrogation à distance de ladite base de données.

L'invention porte aussi sur un système de détection de messages non sollicités comprenant une pluralité de réseaux tels que définis ci-dessus, les différents réseaux étant spécialisés pour la détection de messages non sollicités ayant trait à différents centres d'intérêt ou différents groupements de centres d'intérêts.

L'invention sera mieux comprise à l'aide de la description suivante d'un exemple particulier de mise en oeuvre, non limitatif, du procédé de détection de messages non sollicités, de l'agent de détection, du terminal, du réseau et du système de l'invention, en référence aux dessins annexés sur lequel:
- la figure 1 représente un schéma du réseau pour la détection de messages non sollicité;
- la figure 2A représente un schéma bloc fonctionnel d'un terminal lourd doté d'un agent de détection de messages non sollicités;
- la figure 2B représente un schéma bloc fonctionnel d'un terminal léger doté d'un agent de détection de messages non sollicités et
- la figure 3 représente un organigramme des étapes du procédé de détection de messages non sollicités.

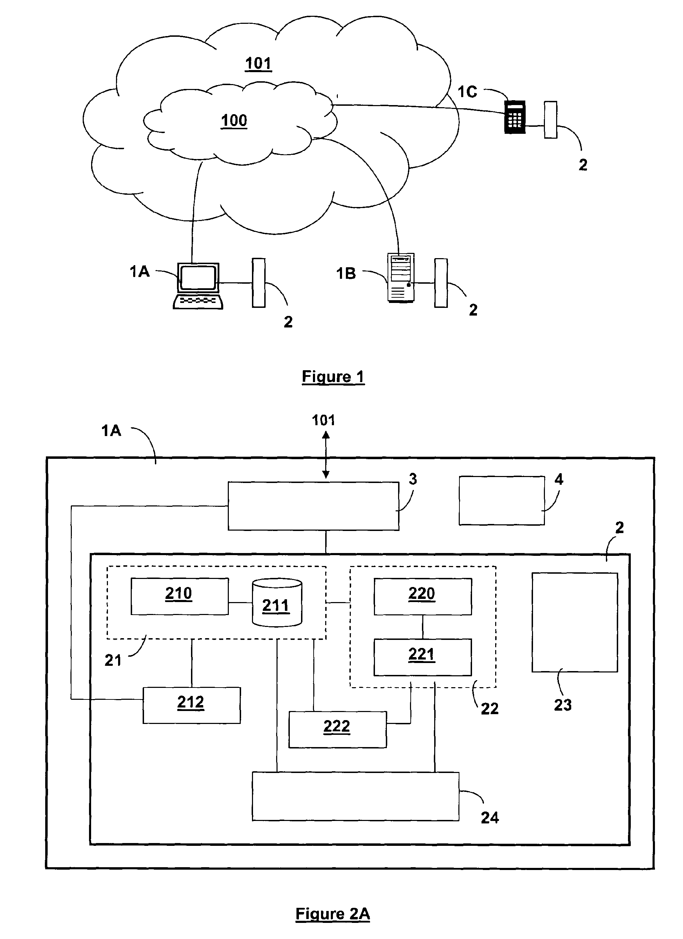

Sur la figure 1, on a représenté un réseau 100 spécialisé pour la détection de messages non sollicités ayant trait à un centre d'intérêt donné. En variante, le réseau 100 pourrait être spécialisé pour la détection de messages non sollicités ayant trait à un groupement de centres d'intérêt (messages rédigés en français ayant trait au Jazz par exemple). Le réseau spécialisé 100 est un réseau "Peer-to-Peer", ou P2P, comprenant une pluralité de terminaux pairs 1A, 1B et 1C et une base de données partagée, accessible à tous les terminaux pairs du réseau 100. Par définition, des terminaux "pairs" sont des terminaux partageant au moins un centre d'intérêt commun, pour lequel le réseau 100 auquel ils appartiennent est spécialisé. Le réseau spécialisé 100 fait partie d'un système constitué d'une pluralité de réseaux de terminaux pairs, spécialisés en fonction de leurs centres d'intérêts respectifs différents. En d'autres termes, les différents réseaux sont spécialisés pour la détection de messages non sollicités ayant trait à différents centres d'intérêt ou à différents groupements de centres d'intérêts. Le système de réseaux spécialisés 100 fait partie d'un réseau de communication 101, en l'espèce l'Internet, auquel sont connectés les terminaux des différents réseaux spécialisés 100.

Le réseau spécialisé 100 comprend
- des terminaux de communication légers 1C, ayant des capacités de stockage réduites et dépourvus de capacités de traitement local, tels que par exemple des assistants numériques personnels, ou PDA (Personal Digital Assistant),
- des terminaux de communication lourds 1 A et 1B, ayant des capacités de stockage suffisantes pour héberger des bases de données d'attributs de messages non sollicités et des capacités de traitement local, tels que des ordinateurs personnels, ou PC (Personal Computer), ou encore des serveurs passerelles ("home gateways") assurant l'interconnexion entre différents réseaux.

La base de données partagée du réseau 100 contient des attributs de messages non sollicités, en l'espèce des signatures de messages non sollicités obtenues par la fonction de hachage SHA-1. Elle est accessible à l'ensemble des terminaux 1A-1C, légers et lourds, du réseau 100. Dans l'exemple particulier de la description, la base de données est distribuée sur le réseau 100, les terminaux lourds 1A, 1B du réseau 100 stockant chacun une partie des signatures de messages non sollicités de la base de données réseau. On pourrait envisager que la base de données du réseau 100, partagée ou accessible à l'ensemble des terminaux 1A-1C, soit centralisée, localisée dans un serveur, au lieu d'être distribuée sur le réseau. En outre, la base de données du réseau 100 peut être mise à jour, par ajout de signatures de nouveaux messages non sollicités, par les terminaux lourds du réseau 100, comme cela sera explicité plus loin.

D'emblée, on notera que, par souci de clarté, les éléments correspondants des terminaux lourds 1 A, 1B et des terminaux légers 1C portent les mêmes références.

On va d'abord décrire le terminal lourd 1A, en référence à la figure 2A.

Le terminal 1A comprend un module 3 d'émission et de réception de données à travers l'Internet 101 et un agent 2 de détection de messages non sollicités.

L'agent de détection 2 comprend un module 21 apte à mettre en oeuvre un mécanisme d'analyse locale et un module 22 apte à mettre en oeuvre un mécanisme d'analyse par interrogation de la base de données distante du réseau 100.

Le module 21 apte à mettre en oeuvre le mécanisme d'analyse locale de messages non sollicités comprend, en référence à la figure 2A, un filtre bayésien 210 et une base de données locale 211. La base de données locale 211, propre au terminal lourd 1A, est un dictionnaire contenant des unités lexicales associées chacune à une probabilité d'être dans un message non sollicité. On rappelle ici que l'expression "unité lexicale" désigne un mot, un groupe de mots formant une expression ou un dérivé d'un mot ou d'une expression constitué(e) d'une combinaison de lettres et d'autres éléments, par exemple des caractères de ponctuation. Le filtre bayésien 210 est agencé pour décomposer un message en unités lexicales et pour calculer la probabilité globale du message d'être un message non sollicité à partir des probabilités d'être dans un message non sollicité, associées aux différentes unités lexicales qui le composent. Si une unité lexicale n'est pas déjà contenue dans la base de données locale 211, le filtre 210 lui attribue une probabilité prédéfinie, en l'espèce 0,4. Pour plus de précisions concernant l'utilisation du filtrage bayésien pour la détection de messages non sollicités, le lecteur est invité à se reporter aux travaux de Paul Graham, notamment à l'article intitulé "A plan for spam", extrait de l'ouvrage "Hackers and Painters" - O'Reilly, 2004, ISBN 0596006624. Dans l'exemple particulier de la description, si la probabilité globale du message
- est supérieure à un seuil haut, ici égal à 0,7, le module 21 détecte qu'il s'agit d'un message non sollicité;
- est inférieure à un seuil bas, ici égal à 0,3, le module 21 détecte qu'il ne s'agit pas d'un message non sollicité;
- est comprise entre le seuil haut et le seuil bas, autrement dit dans une plage d'incertitude s'étendant ici entre 0,3 et 0,7, le module 21 détecte que le caractère non sollicité / sollicité du message est incertain.

On notera que le module 21 permet au terminal 1A de détecter localement des messages non sollicités de façon automatique (en l'espèce par filtrage bayésien), sans élection manuelle d'un utilisateur.

Le module de détection 22, apte à mettre en oeuvre le mécanisme d'analyse de messages non sollicités par interrogation de la base de données distante de signatures de tout ou partie des messages non sollicités du réseau 100, comprend un bloc 220 de calcul de signatures de messages, un bloc 221 d'interrogation de la base de données distante du réseau 100. Le bloc de calcul 220 est agencé pour calculer les signatures des messages reçus par le terminal par application de la fonction de hachage SHA-1. Le bloc 221 d'interrogation de la base de données distante est agencé pour interroger le réseau P2P 100 afin de déterminer si la signature d'un message, préalablement calculée par le bloc 220, correspond à la signature d'un message non sollicité déjà contenue dans la base de données distante du réseau 100.

On notera également ici que le module 22 permet au terminal 1A de détecter des messages non sollicités de façon automatique (en l'espèce par interrogation d'une base de données distante de signatures de messages non sollicités), sans élection manuelle d'un utilisateur.

Comme on l'a précédemment explicité, le terminal lourd 1A est doté des deux mécanismes de détection de messages non sollicités, locale et par interrogation de la base de données distante du réseau 100. Le terminal 1A est agencé pour mettre en oeuvre ces deux mécanismes séquentiellement, l'un après l'autre, si nécessaire: le mécanisme d'analyse locale est mis en oeuvre en premier et, s'il ne parvient à déterminer de façon certaine si le message reçu est un message non sollicité ou un message valable, autrement dit si la probabilité globale du message est située à l'intérieur de la plage d'incertitude, le mécanisme d'analyse par interrogation de la base de données distante est mis en oeuvre en second. Bien entendu, si le mécanisme d'analyse locale permet de détecter, de façon certaine, que le message reçu est un message non sollicité ou n'est pas un message non sollicité, le mécanisme d'analyse par interrogation de la base de données distante du réseau 100 n'est pas mis en oeuvre en second. On soulignera ici que les deux mécanismes d'analyse des messages, destinés à mis en oeuvre par le terminal 1A respectivement localement et par interrogation de la base de données distante, reposent sur deux méthodes d'analyse respectives différentes: le filtrage bayésien et les signatures.

Le terminal lourd 1A comprend en outre
- un bloc 212 de mise à jour de la base de données distante du réseau 100 et
- un bloc 222 de mise à jour de la base de données locale 211 du terminal 1 A.

Le bloc de mise à jour 212 est relié au module d'émission/réception 3 et aux deux modules de détection 21 et 22. Le bloc de mise à jour 222 est relié aux deux modules de détection 21 et 22.

Lorsque le module 22 de détection par interrogation de la base de données distante détecte qu'un message reçu M est un message non sollicité, le bloc 222 met à jour la base de données locale 211 utilisée par le mécanisme d'analyse locale de messages non sollicités avec le message non sollicité M, de telle sorte que le module de détection locale 21 soit capable de détecter localement, sans interroger la base de données distante du réseau 100, que le message M est un message non sollicité si le terminal reçoit ce message une nouvelle fois.

Lorsque le module de détection locale 21 détecte qu'un message M est un message non sollicité, le bloc de mise à jour 212 met à jour la base de données distante du réseau 100 avec le message non sollicité M. Pour cela, le bloc 212 commande le calcul de la signature du message M par le bloc de calcul 220 puis envoie cette signature sur le réseau P2P 100 en vue de son enregistrement dans la base de données partagée et distribuée du réseau P2P 100.

En outre, l'agent de détection 2 comprend un module 23 de rattachement du terminal 1A à un réseau P2P spécialisé. Le module de rattachement 23 est agencé pour déterminer, parmi une liste prédéterminée de centres d'intérêt respectivement associés aux différents réseaux spécialisés du système, au moins un centre d'intérêt du terminal, et à rattacher ce terminal au réseau P2P spécialisé pour la détection de messages non sollicités ayant trait à ce centre d'intérêt. La détermination du centre d'intérêt du terminal peut, par exemple, être effectuée par détection de mots clés significatifs.

L'agent de détection 2 comprend en outre un module 24 de traitement des messages non sollicités, reliés aux modules de détection 21 et 22, agencés pour appliquer l'un des traitements suivants aux messages non sollicités, selon le choix de l'utilisateur:
- suppression des messages non sollicités,
- marquage des messages non sollicités ou
- enregistrement des messages non sollicités dans un emplacement mémoire spécifique.

On notera ici que l'agent de détection 2 est ici un logiciel comprenant des instructions logicielles pour mettre en oeuvre le procédé qui sera décrit plus loin.

Enfin, le terminal 1A comprend une mémoire 4 de stockage de signatures de messages non sollicités, laquelle contient une partie des signatures de messages non sollicités de la base de données distribuée du réseau 100.

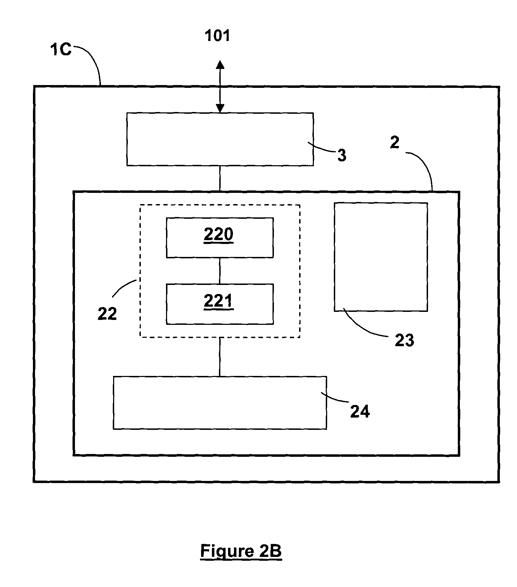

Sur la figure 2B, on a représenté le terminal léger 1C comprenant un module 3 d'émission et de réception de données et un agent 2 de détection de messages non sollicités.

L'agent de détection 2 comprend un module 23 de rattachement à un réseau spécialisé 100, un module 22 de détection de messages non sollicités par interrogation de la base de données distante du réseau spécialisé 100 et un module 24 de traitement des messages non sollicités. L'agent de détection 2 du terminal léger diffère donc de celui du terminal lourd par le fait qu'il ne comprend ni module 21 de détection locale, ni module 212 de mise à jour de la base de données distante, ni module 222 de mise à jour d'une base de données locale, ni mémoire 4 de stockage d'une partie de la base de données du réseau 100.

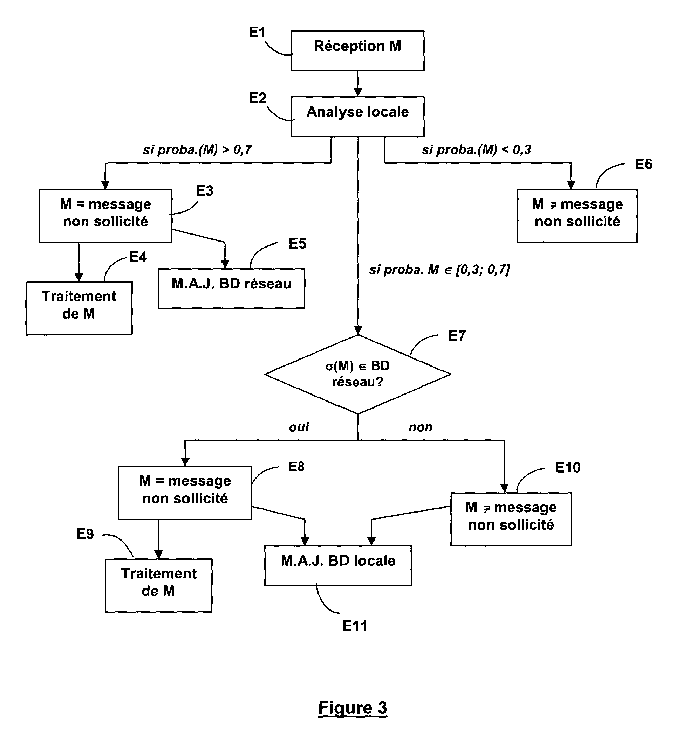

Le procédé de détection, parmi les messages reçus par un terminal lourd 1A, de messages non sollicités va maintenant être décrit en référence à la figure 3.

Lors d'une étape E1, le terminal 1A reçoit un message M. Dans un premier temps, lors d'une étape E2, le terminal 1A analyse localement ce message M, par un filtrage bayésien, afin de déterminer s'il s'agit d'un message non sollicité ou d'un message sollicité. Pour cela, le filtre bayésien du terminal 1A décompose le message reçu M en unités lexicales uᵢ, extrait de la base de données locale la probabilité d'être dans un message non sollicité associée à chaque unité lexicale uᵢ et calcule la probabilité globale du message d'être un message non sollicité. Si une unité lexicale uᵢ n'est pas déjà répertoriée dans la base de données locale, une valeur de probabilité prédéfinie, en l'espèce 0,4, lui est attribuée. Si la probabilité globale du message est supérieure au seuil haut, fixé à 0,7, le terminal 1A détecte, dans une étape E3, que le message est un message non sollicité. On soulignera que cette détection est effectuée automatiquement, par le terminal 1A, sans élection par l'utilisateur. Un traitement spécifique (marquage, suppression ou classement) est alors appliqué au message, dans une étape E4.

Par ailleurs, sur détection locale du message non sollicité M, le terminal 1A effectue une mise à jour (M.A.J.) de la base de données (BD) partagée du réseau 100, dans une étape E5. Pour cela, il calcule une signature du message non sollicité, par hachage à l'aide de la fonction SHA-1, et la transmet au réseau P2P 100 afin de l'enregistrer dans la base de données distante du réseau 100. La base de données partagée du réseau 100 est ainsi mise à jour par le terminal 1A, sur détection locale d'un message non sollicité à l'aide de son filtre bayésien. Grâce à l'invention, lorsqu'un nouveau message non sollicité est détecté par l'un des filtres bayésiens du réseau P2P 100, l'information est transmise au réseau P2P 100 de façon à ce que tous les terminaux, légers et lourds, du réseau P2P 100 bénéficient du résultat de cette détection locale. Ainsi, une très large myriade de terminaux 1A-1C peut bénéficier des résultats issus d'une myriade de filtres bayésiens locaux, spécialisés du fait de leur appartenance à un réseau P2P spécialisé de terminaux partageant le même centre d'intérêt.

On notera également que sur détection locale du message non sollicité M, le terminal 1A met également à jour sa propre base de données locale, de façon connue.

Si la probabilité globale du message M est inférieure au seuil bas, fixé à 0,3, le terminal 1A détecte que le message n'est pas un message non sollicité, dans une étape E6.

Si la probabilité globale du message M est comprise entre le seuil bas et le seuil haut, autrement dit dans la plage d'incertitude, il existe une incertitude sur le caractère sollicité ou non sollicité du message M. Le terminal 1A déclenche alors le mécanisme d'analyse de messages par interrogation de la base de données distante du réseau P2P 100, dans une étape E7. Pour cela, le terminal 1A calcule une signature du message reçu M et interroge la base de données distante du réseau P2P afin de déterminer s'il s'agit de la signature d'un message non sollicité déjà répertoriée dans la base de données du réseau 100 (BD réseau), par exemple par envoi d'une requête de type "loohup" pour une recherche de valeur de hachage. Si tel est le cas, le terminal 1A détecte que le message M est un message non sollicité, dans une étape E8, et lui applique un traitement approprié (marquage, suppression et classement), dans une étape E9. La détection du message par interrogation de la base de données distante de signatures est ainsi effectuée automatiquement à partir du terminal 1 A. Sinon, le terminal 1A détecte que le message M n'est pas un message non sollicité, dans une étape E10.

Par ailleurs, sur détection du caractère sollicité ou non sollicité du message M par interrogation de la base de données distante du réseau 100, le terminal 1 A met à jour (M.A.J.) sa propre base de données locale d'unités lexicales 211 (BD locale), dans une étape E11, de façon à être capable de détecter une prochaine fois localement, par filtrage bayésien, que ce message M est un message valide ou non sollicité.

Dans le cas où le terminal est un terminal léger 1C, il met uniquement en oeuvre le mécanisme d'analyse des messages par interrogation à distance de la base de données partagée du réseau, préalablement décrit. Les terminaux légers bénéficient ainsi des résultats des détections locales de messages non sollicités effectuées localement par la myriade de filtres bayésiens spécialisés du réseau 100.

La base de données du réseau pourrait contenir des signatures de messages non sollicités obtenues par des fonctions de calcul de signatures autres que la fonction de hachage SHA-1 ou d'autres types d'attributs de messages non sollicités.

Dans l'exemple particulier de la description qui précède, le système comprend une pluralité de réseaux de terminaux pairs, spécialisés par centres d'intérêt et dotés chacun d'une base de données spécialisée, distribuée sur le réseau. En variante, le système pourrait comprendre une pluralité de bases de données, spécialisées en fonction de centres d'intérêt, et des terminaux ayant des centres d'intérêt respectifs différents et ayant accès, de manière sélective, aux bases de données spécialisées pour leurs centres d'intérêts respectifs. L'accès aux bases de données pourrait être contrôlé de manière à n'autoriser un terminal qu'à accéder à la base de données spécialisée correspondant à son propre centre d'intérêt.

Le réseau 100 est spécialisé pour la détection de messages non sollicités ayant trait à un centre d'intérêt particulier. En variante, le réseau 100 pourrait être spécialisé pour la détection de messages non sollicités ayant trait à un groupement de plusieurs centres d'intérêt. Dans ce cas, un terminal pourrait être rattaché à un réseau spécialisé, ou à une base de données spécialisée, s'il a au moins un centre d'intérêt commun avec ce réseau, ou cette base de données.

## Revendications

1. Procédé de détection, parmi des messages reçus par un terminal (1A), de messages non sollicités, dans lequel au moins l'un des deux mécanismes d'analyse suivants est mis en oeuvre afin de détecter si un message reçu est un message non sollicité:
- un mécanisme (E2) d'analyse locale du message reçu à l'aide d'un agent de détection de messages non sollicités, propre au terminal (1A) et doté d'une base de données locale (211) contenant des attributs de messages non sollicités,
- un mécanisme (E7) d'analyse du message reçu par interrogation d'une base de données distante d'un réseau (100) et contenant des attributs de messages non sollicités,
**caractérisé par le fait que**, dans le cas où un premier des deux mécanismes d'analyse détecte qu'un message reçu est un message non sollicité (E3, E8), il est prévu une étape (E5, E11) consistant à mettre à jour la base de données (211) utilisée par le second mécanisme d'analyse avec le message non sollicité détecté par le premier mécanisme.

2. Procédé selon la revendication 1, dans lequel
- le mécanisme d'analyse locale des messages (E2) est mis en oeuvre en premier,
- dans le cas où le mécanisme d'analyse locale ne parvient pas à déterminer de façon certaine si le message reçu est non sollicité, le mécanisme d'analyse par interrogation de la base de données distante (E7) est mis en oeuvre en second.

3. Procédé selon la revendication 2, dans lequel, si le mécanisme d'analyse par interrogation de la base de données distante détecte que le message reçu est un message non sollicité (E8), la base de données locale (211) est mise à jour (El 1).

4. Procédé selon l'une des revendications 2 et 3, dans lequel, dans le cas où le mécanisme d'analyse locale des messages détecte que le message est un message non sollicité (E3), la base de données distante est mise à jour (E5).

5. Procédé selon l'une des revendications 1 à 4, dans lequel il est prévu une étape consistant
- à déterminer au moins un centre d'intérêt d'un utilisateur du terminal (1A) et
- à rattacher le terminal à un réseau (100) spécialisé dans la détection de messages ayant trait au centre d'intérêt du terminal (1A), auquel la base de données distante contenant des attributs de messages non sollicités appartient.

6. Procédé selon la revendication 5, dans lequel, le terminal (1A) mémorise une partie de la base de données du réseau spécialisé (100) auquel il appartient, ladite base de données étant distribuée sur le réseau spécialisé (100).

7. Procédé selon l'une des revendications 1 à 6, dans lequel, la base de données distante mémorise des signatures de messages non sollicités et, après détection d'un message non sollicité à l'aide du mécanisme d'analyse locale (E3), le terminal calcule une signature dudit message non sollicité et la transmet au réseau (100) afin de l'enregistrer dans la base de données distante dudit réseau (100).

8. Procédé selon l'une des revendications 1 à 7, dans lequel le mécanisme d'analyse locale de messages utilise un filtre bayésien (210) et la base de données locale (211) contient des unités lexicales associées chacune à une probabilité d'être dans un message non sollicité.

9. Agent de détection de messages non sollicités pour un terminal, pour la mise en oeuvre du procédé selon l'une des revendications 1 à 8, comprenant une base de données locale (210) contenant des attributs de messages non sollicités et des moyens (21) d'analyse locale de messages agencés pour déterminer si un message est un message non sollicité par comparaison d'attributs du message avec les attributs de la base de données locale (211), **caractérisé par le fait qu'**il comprend
- des moyens (22) d'analyse de messages par interrogation d'une base de données distante d'un réseau (100), ladite base de données distante contenant des attributs de messages non sollicités, afin de détecter si le message est un message non sollicité,
- des moyens (222) pour mettre à jour la base de données locale (211) avec un message non sollicité détecté par interrogation de la base de données distante.

10. Agent de détection de messages non sollicités pour un terminal, pour la mise en oeuvre du procédé selon l'une des revendications 1 à 7, comprenant une base de données locale (211) contenant des attributs de messages non sollicités et des moyens (210) d'analyse locale de messages agencés pour déterminer si un message est un message non sollicité par comparaison d'attributs du message avec les attributs de la base de données locale (211), **caractérisé par le fait qu'**il comprend des moyens pour, sur détection locale d'un message non sollicité, mettre à jour une base de données distante d'un réseau (100), contenant des attributs de messages non sollicités.

11. Agent de détection selon l'une des revendications 9 et 10, dans lequel il est prévu des moyens (23) pour déterminer au moins un centre d'intérêt du terminal (1A) et pour rattacher le terminal (1A) à un réseau (100) spécialisé dans la détection de messages ayant trait au centre d'intérêt du terminal (1A), auquel la base de données distante contenant des attributs de messages non sollicités appartient.

12. Agent de détection selon l'une des revendications 9 à 11, dans lequel la base de données locale (211) contient des unités lexicales associées chacune à une probabilité d'être dans un message non sollicité et les moyens (210) d'analyse locale des messages comprennent un filtre bayésien.

13. Terminal comprenant un agent de détection (2) selon l'une des revendications 9 à 12.

14. Terminal selon la revendication 13, dans lequel il est prévu des moyens (4) de stockage d'une partie d'une base de données distante contenant des attributs de messages non sollicités.

15. Réseau pour la détection de messages non sollicités comprenant
- une pluralité de terminaux (1A) selon l'une des revendications 13 et 14,
- une base de données contenant des attributs de messages non sollicités, accessible aux terminaux du réseau en vue de la détection de messages non sollicités par interrogation à distance de ladite base de données.

16. Réseau selon la revendication 15, dans lequel la base de données est distribuée, chaque terminal (1A) stockant une partie de ladite base de données.

17. Réseau selon l'une des revendications 15 et 16, dans lequel les terminaux partagent au moins un centre d'intérêt commun, le réseau (100) étant spécialisé pour la détection de messages non sollicités ayant trait à ce centre d'intérêt.

18. Système de détection de messages non sollicités comprenant une pluralité de réseaux selon l'une des revendications 15 à 17, les différents réseaux (100) étant spécialisés pour la détection de messages non sollicités ayant trait à différents centres d'intérêt ou différents groupements de centres d'intérêts.
